# EUROPÄISCHE PATENTSCHRIFT

(11) **EP 2 250 560 B1**
(45) Veröffentlichungstag und Bekanntmachung des Hinweises auf die Patenterteilung: **19.11.2014**
(21) Anmeldenummer: 09718214.1
(22) Anmeldetag: 03.03.2009
(51) Int. Cl.: G06F 11/07, G06F 11/00

(54) **VERFAHREN ZUR ERHÖHUNG DER ROBUSTHEIT VON COMPUTERSYSTEMEN SOWIE COMPUTERSYSTEM**
METHOD FOR INCREASING THE ROBUSTNESS OF COMPUTER SYSTEMS AND COMPUTER SYSTEM
PROCÉDÉ PERMETTANT D'AUGMENTER LA ROBUSTESSE DE SYSTÈMES INFORMATIQUES, ET SYSTÈME INFORMATIQUE CORRESPONDANT

(30) Priorität: 04.03.2008 AT 3502008
(43) Veröffentlichungstag der Anmeldung: 17.11.2010
(73) Patentinhaber: FTS Computertechnik Gmbh, 1040 Wien (AT)
(72) Erfinder: POLEDNA, Stefan, A-3400 Klosterneuburg (AT)
(74) Vertreter: Matschnig, Franz
(86) Internationale Anmeldenummer: PCT/AT2009/000086
(87) Internationale Veröffentlichungsnummer: WO 2009/108978

(56) Entgegenhaltungen:
- KOPETZ H: "Real-Time Systems : Design Prinicples for Distributed Embedded Applications" 1998, KLUWER ACADEMIC PUBLISHERS , BOSTON , XP002535835 in der Anmeldung erwähnt Abbildung 2.1 Abbildung 2.2 Seite 75, letzter Absatz - Seite 77, Absatz 1 Seite 92, Absatz 3 - Seite 93, Absatz 1 Abbildung 4.10 Seite 123, Absatz 2 Seite 135, Absatz 2 - Seite 137, Absatz 2 Seite 277, letzter Absatz - Seite 278, Absatz 1
- KOPETZ H ET AL: "The transparent implementation of fault tolerance in the time-triggered architecture" DEPENDABLE COMPUTING FOR CRITICAL APPLICATIONS 7, 1999 SAN JOSE, CA, USA 6-8 JAN. 1999, PISCATAWAY, NJ, USA,IEEE, US, 6. Januar 1999 (1999-01-06), Seiten 191-205, XP010366438 ISBN: 978-0-7695-0284-7
- AHUJA, M. KSHEMKALYANI, A.D. CARLSON, T.: "A basic unit of computation in distributed systems" DISTRIBUTED COMPUTING SYSTEMS, 1990. PROCEEDINGS., 10TH INTERNATIONAL CONFERENCE ON, Bd. -, Nr. -, Juni 1990 (1990-06), Seiten 12-19, XP002535899

## Beschreibung

Die Erfindung betrifft ein Verfahren zur Erhöhung der Robustheit eines verteilten Computersystems, bestehend aus einer Vielzahl von Komponenten, wobei jede Komponente über ein Kommunikationssystem Nachrichten an die anderen Komponenten senden kann.

Weiters betrifft die Erfindung ein verteiltes Echtzeitcomputersystem zum Durchführen eines solchen Verfahrens, wobei das Echtzeitcomputersystem aus einer Vielzahl von Komponenten besteht, wobei jede Komponente über ein zeitgesteuertes Kommunikationssystem Nachrichten an die anderen Komponenten senden kann.

Der Begriff der *Robustheit eines Computersystem* bezieht sich auf die Anforderung an ein solches System, selbst beim Auftreten von *Störungen* (*perturbations*) ein sinnvolles Verhalten zu zeigen. Der Begriff der *Störung* ist ein sehr allgemeiner und absichtlich unscharf gehaltener Begriff, der viele unerwünschte Phänomene umfasst: Entwurfsfehler in Hardware und Software, Fehler während des Betriebs, Fehlbedienung durch den Benutzer, oder eine Verwendung, die nicht der Spezifikation entspricht, um nur einige der unerwünschten Phänomene zu nennen.

In umfangreichen Echtzeitsystemen treten die vermehrten Störungen primär aus zwei Gründen auf: hohe Komplexität, die zu nicht erkannten Entwurfsfehlern führt und transiente Störungen während des Betriebs. Die hohe Entwurfskomplexität führt zu *Heisenbugs* und *Bohrbugs* in Hardware- und Software [Gray, J. (1986). Why do Computers Stop and What can be done about it? Proc. of the 5th Symp. on Reliability in Distributed Software and Database Systems. Los Angeles, CA, USA.]. *Heisenbugs* sind Entwurfsfehler, die nur unter seltenen zeitlichen Randbedingungen auftreten und daher schwer zu reproduzieren und zu eliminieren sind (z.B. Fehler in der Synchronisation). *Heisenbugs* zeigen aus der Sicht des Testers oft ein nicht-deterministisches Verhalten. *Bohrbugs* sind Entwurfsfehler, die ein deterministisches Verhalten aufweisen und daher leichter gefunden und korrigiert werden können. *Heisenbugs* und *Bohrbugs* treten sowohl in der Hardware, wie auch in der Software auf.

Die signifikante Zunahme der transienten Hardwarefehler während des Betriebs hat ihre Ursache in der Verkleinerung der Transistoren in den integrierten Schaltungen. Die immer geringer werdende elektrische Ladung, die den logischen Zustand eines Schaltelementes markiert, kann durch ambiente radioaktive Strahlung zufällig gestört werden. Durch die Reduzierung der Größe der Bauteile können quantenmechanische Effekte zu einem nichtdeterministischen Verhalten der Schaltungen führen. Da voraussichtlich die Zuverlässigkeit pro Bauteil nicht mehr so schnell zunehmen wird wie die Anzahl der Bauteile pro Chip, ist zu erwarten, dass die Zuverlässigkeit pro Chip - vor allem in Bezug auf transiente Störungen - in Zukunft abnehmen wird und daher alle Verfahren, die zu einer Verbesserung der Robustheit eines Systems führen, von besonderer Bedeutung sein werden.

Aus der Sicht des Verhaltens eines Programms ist es dabei unwesentlich, ob ein Fehlzustand eines Registers durch einen transienten Hardwarefehler oder durch einen *Heisenbug* im Entwurf hervorgerufen wird.

Es ist eine Aufgabe der Erfindung, ein Verfahren bzw. Computersystem vorzustellen, bei welchem unabhängig von der Fehlerursache nach wie vor ein sinnvolles Verhalten im Fehlerfall gegeben ist.

Diese Aufgabe wird mit einem eingangs erwähnten Verfahren bzw. Computersystem gelöst, bei welchem erfindungsgemäß zumindest eine der Komponenten eine Verarbeitungskomponente ist, und zumindest eine der Komponenten eine Ground-State-Checking-Komponente ist, und wobei die zumindest eine Verarbeitungskomponente periodisch zu einem periodisch wiederkehrenden *Restartzeitpunkt* eine *Ground-State (GS)-Nachricht,* die einen unmittelbar vor dem Zeitpunkt des Sendens relevanten *Ground-State* der Verarbeitungskomponente enthält, an die zumindest eine Ground-State-Checking-Komponente sendet, und wobei die Ground-State-Checking-Komponente die eintreffende Ground-State-Nachricht im Wertebereich und im Zeitbereich überprüft, und wobei im Falle einer Fehlererkennung in der Ground-State-Nachricht die Ground-State-Checking-Komponente den Fehler im Ground-State korrigiert und vor dem nächsten *Restartzeitpunkt* den *korrigierten Ground-State* in einer korrigierten Ground-State-Nachricht an jene Verarbeitungskomponente, von welcher die fehlerbehaftete Ground-State-Nachricht stammte, sendet, und wobei nach Eintreffen der korrigierten GS-Nachricht bei der Verarbeitungskomponente diese Verarbeitungskomponente beim nächsten *Restartzeitpunkt* einen Restart unter Anwendung des in der korrigierten GS-Nachricht enthaltenen korrigierten Ground-States durchführt.

Mit der Erfindung kann die Robustheit eines Echtzeitcomputersystems in Bezug auf transiente Fehler, die eine beliebige Ursache haben können, verbessert werden, wodurch unabhängig von der Fehlerursache ein sinnvolles Verhalten des Systems im Fehlerfall ermöglicht wird.

Das erfindungsgemäße Verfahren beruht auf einer Kombination von drei Prinzipien, dem Prinzip der *Ground-State (GS) Korrektur,* dem Prinzip der unabhängigen *Fault-Containment Units* und dem Prinzip der *Resilience.*

Unter dem *deklarierten Zustand eines Echtzeitsystems* zu einem gegebenen Zeitpunkt wird der Inhalt einer speziellen Datenstruktur verstanden, die zu diesem Zeitpunkt alle Informationen aus der Vergangenheit beinhaltet, die für das zukünftige Verhalten des Systems von Bedeutung sind. Die Größe dieser Datenstruktur - und damit des Zustands - ist vom gewählten Betrachtungszeitpunkt abhängig. Um den Restart eines Systems nach einem Fehler zu ermöglichen, ist es erforderlich, im Entwurf einer Anwendung periodische Zeitpunkte (Restartzeitpunkte) einzuführen, zu denen der *deklarierte Zustand* eindeutig definiert ist und einen kleinen Umfang hat. Die zyklische Folge solcher Restartzeitpunkte bezeichnet man als *Ground-Cycle* und den entsprechend *deklarierten Zustand* als *Ground State* [Kopetz, H. (1997). Real-Time Systems, Design Principles for Distributed Embedded Applications; ISBN: 0-7923-9894-7. Boston. Kluwer Academic Publishers, S. 92]. Die Auswahl der Informationen, die zum Restartzeitpunkt im *Ground State* enthalten sein müssen, ist nur im Rahmen einer sorgfältigen Analyse der gegebenen Anwendung möglich und muss daher im Rahmen der Anwendungsentwicklung vorgenommen werden.

Es wird vorgeschlagen, das System in *Komponenten* zu strukturieren, die unabhängige *Fault-Containment Units (FCU)* darstellen. Eine Komponente ist eine Hardware/Software Einheit, die eine gegebene Aufgabe (Berechnung oder Datenübertragung) erfüllt und im fehlerfreien Fall das spezifizierte Verhalten zeigt. Ein Computer mit der dazugehörigen System- und Anwendersoftware stellt somit ein Beispiel für eine Komponente dar, ebenso eine FPGA (Field-Programmable-Gate-Array) Einheit, d.i. eine dedizierte Hardware, die das spezifiziertes Verhalten zeigt.

Eine FCU ist eine Komponente, die vom Rest des Systems so abgekapselt ist, dass im Fehlerfall nur die vom Fehler direkt betroffene Komponente ausfällt und die unmittelbaren Auswirkungen des Fehlers die anderen vom Fehler nicht direkt betroffenen Komponenten nicht stören. Erfindungsgemäß ist ein umfangreiches Systems in eine Anzahl von Komponenten zu unterteilen, welche FCUs sind, und wo ein transienter Ausfall einer FCU sofort behoben wird.

Das Prinzip der *Resilience* besagt, dass in vielen Anwendungen gewisse Fehler vom Benutzer toleriert werden können. Zum Beispiel kann in einer Multimedianwendung der kurzzeitige Fehler in einem der vielen hunderttausend Bildpunkte vom Beobachter auf der Basis der gegebenen *kognitiven Resilience* ohne wesentliche Qualitätseinbuße toleriert werden. In regelungstechnischen Anwendungen kann ein intelligenter Aktuator dadurch *resilient* gemacht werden, dass er nur Steuersignale akzeptiert, die innerhalb eines für die gegebene Applikation charakteristischen *a priori* festgelegten plausiblen Rahmens (Wertebereich, Gradient, etc.) liegen. Wird aufgrund eines Fehlers in einer Komponente, die einen Sollwert vorzugeben hat, ein Wert ausgegeben, der außerhalb dieses Rahmens liegt, so wird der Wert von der intelligenten Ausgabekomponente nicht übernommen, da er offensichtlich falsch ist.

Der genaue Ablauf des neuen Verfahrens zur Hebung der Robustheit eines Echtzeitcomputersystems wird im folgenden Abschnitt anhand der Abbildungen genau beschrieben.

Das vorab beschriebene Ziel und andere neue Eigenschaften der vorliegenden Erfindung werden in der Zeichnung an Hand eines Beispiels näher erläutert. In der Zeichnung zeigt
Fig. 1 die Struktur eines verteilten Computersystems mit drei Komponenten, und
Fig. 2 den zeitlichen Ablauf des Nachrichtenaustauschs zwischen einer Verarbeitungskomponente und einer Überwachungskomponente.

Im folgenden Abschnitt wird eine Realisierung des neuen Verfahrens an einem möglichen Beispiel mit drei Komponenten, die über ein Echtzeitkommunikationssystem verbunden sind, gezeigt.

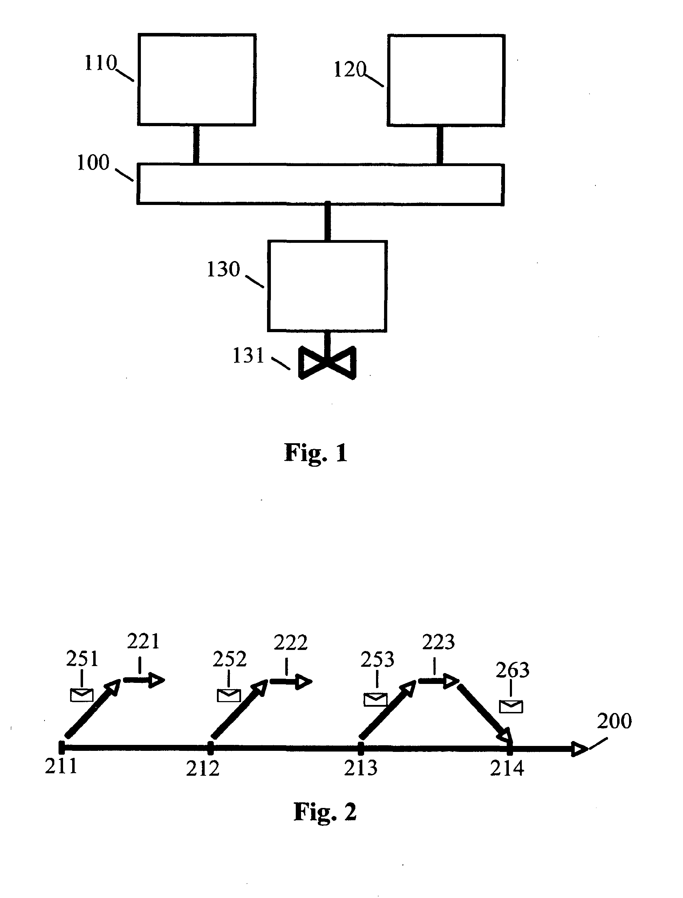

Fig. 1 zeigt die drei Komponenten des beispielhaften verteilten Echtzeitcomputersystems. Die Verarbeitungskomponente **110** ist über das Nachrichtenkommunikationssystem **100** mit der Überwachungskomponente, der *GSC-Komponente (Ground-State-Checking Komponente)* **120** und der Ausgabekomponente **130** verbunden. Das Nachrichtenkommunikationssystem **100** kann zeitgesteuert (z.B. TT-Ethernet, EP 1 512 254 B1) sein und Nachrichten zu den *a priori* festgelegten Zeitpunkten mit minimaler Verzögerung übertragen. Die Ausgabekomponente **130** steuert ein Regelventil **131** an. Die Ausgabekomponente **130** ist *resilient,* d.h. sie verfügt über anwendungsspezifisches Wissen, das es ihr ermöglicht, grob falsche Vorgaben der Verarbeitungskomponente **110** zu erkennen und zu verwerfen. Jede der Komponenten **110, 120,** und **130** kann entweder ein autonomer Computer mit der erforderlichen System- und Anwendersoftware oder ein IP Core auf einem System on Chip (SoC) sein. Wenn die Komponenten **110, 120,** und **130** autonome Computer sind, so kann die Kommunikation im Kommunikationssystem **100** entweder über leitungsgebundene oder über drahtlose Kanäle abgewickelt werden. Wenn die Komponenten **110, 120,** und **130** IP Cores eines SoC sind, so wird die Kommunikation **100** über ein Network-on-Chip abgewickelt. In allen Fällen müssen die Komponenten **110,120,** und **130** autonome *Fault-Containment Units* sein.

Fig. 2 zeigt den zeitlichen Ablauf des Nachrichtenaustauschs zwischen einer Verarbeitungskomponente **110** und der GSC Komponente **120.** Die Zeitachse **200** ist von links nach rechts aufgetragen. Zu den periodischen *Restartzeitpunkten* **211, 212, 213** ... sendet die Verarbeitungskomponente **110** ihren Ground-State in *einer Ground-State (GS) Nachricht* **251, 252, 253 .** .. an die GSC Komponente **120.** Die GSC Komponente 120 überprüft in den Intervallen **221, 222, 223** ... auf der Basis von anwendungsspezifischen Zusicherungen, ob der empfangene *Ground State* plausibel ist.

Die erste Überprüfung im Zeitbereich betrifft die Beobachtung, ob die periodisch erwartete GS Nachricht **251, 252, 253** zum richtigen Zeitpunkt eintrifft. Ein Ausbleiben der periodischen GS Nachricht deutet auf einen Totalausfall der Verarbeitungskomponente **110** hin, wobei unwesentlich ist, welche Störung diesen Totalausfall verursacht hat. Durch diese erste Prüfung im Zeitbereich können bereits viele Fehler erkannt werden.

Im Weiteren werden die gegebenen vom Anwendungsprogrammierer bereitgestellten *Zusicherungen (assertions)* ausgeführt, um die Richtigkeit des Ground States im Wertebereich zu überprüfen. Im angeführten Beispiel werden die Nachrichten **251** und **252** als richtig klassifiziert. In diesem Fall veranlasst die GSC Komponente **120** keine weitere Aktion.

Wenn von der GSC Komponente **120** ein Fehler erkannt wird - im Beispiel wird die Nachricht **253** als fehlerhaft klassifiziert -, so wird mittels *Backward-Recovery* oder *Forward-Recovery* von der GSC Komponente **120** im Zeitintervall **223** die Korrektur des Ground-States derart vorgenommen, dass der Ground-State zum nächsten Restartzeitpunkt **214** wieder richtig ist. Da für diese Ground-State Korrektur *Anwendungswissen* erforderlich ist, muss die Ground-State Korrektur im Rahmen der Anwendung entwickelt werden.

Anschließend wird der korrigierte Ground-State von der GSC Komponente **120** mittels der korrigierten GS Nachricht **263** an die Verarbeitungskomponente **110** gesendet. Nach Eintreffen der korrigierten GS Nachricht **263** wird vom Kommunikationsinterface der Verarbeitungskomponente **110** ein Restart der Verarbeitungskomponente mit dem in der Nachricht **263** enthaltenen korrigierten Ground-State realisiert.

Dieser Restart der Verarbeitungskomponente **110** kann in zwei Schritten erfolgen. Im ersten Schritt wird die Verarbeitungskomponente durch einen *Hardware-Reset* in ihren Initialisierungszustand versetzt. Damit werden alle durch einen transienten Fehler verursachten Spuren im Zustand zuverlässig gelöscht. Unmittelbar anschließend liest die Verarbeitungskomponente die GS Nachricht **263** und setzt ihren Ground-State entsprechend dem Inhalt dieser Nachricht. Damit übernimmt die Komponente jene korrigierten Informationen aus der Vergangenheit, die aus der Sicht der Anwendung als wesentlich für das zukünftige Verhalten erachtet werden.

Im dargestellten Beispiel kann davon ausgegangen werden, dass zum Zeitpunkt **212** die Verarbeitungskomponente noch richtig funktioniert hat, da die Überprüfung der Ground State Nachricht **252** keinen Fehler ergeben hat. Im Intervall zwischen den Zeitpunkten **212** und **214** kann die Verarbeitungskomponente **110** fehlerhafte Ausgaben an die Ausgabekomponente **130** ausgegeben haben. Wenn diese Ausgaben *grob falsch* waren, d.h. sie sind außerhalb des der Ausgabekomponente *a priori* bekannten Wertebereichs und Gradienten, so wurden diese grob falschen Werte von der Ausgabekomponente **130** verworfen und keine Änderungen an der Ventilstellung **131** vorgenommen, anderenfalls hat die Ausgabekomponente möglicherweise plausible aber inhaltlich falsche Stellgrößen in dem Intervall zwischen den Zeitpunkten **212** und **214** an das Ventil **131** ausgegeben. Diese durch den Fehler der Verarbeitungskomponente verursachte kurzzeitige Fehlverhaltens des Ventils **131** kann reduziert werden, wenn die Plausibilitätsüberprüfungen der von der Verarbeitungskomponente **110** produzierten Ausgabenachricht verbessert werden.

Die vorliegende Erfindung hat zum Ziel, in einem verteilten Echtzeitcomputersystem, das aus einer Anzahl von Komponenten besteht, die über ein Echtzeitkommunikationssystem mittels Nachrichten kommunizieren, durch den gezielten Einsatz von Redundanz die Robustheit in Bezug auf transiente Fehler zu verbessern. Dieses Ziel wird dadurch erreicht, dass der anwendungsspezifische *Ground-State* einer Verarbeitungskomponente von einer unabhängigen Überwachungskomponente periodisch überprüft wird, und, falls von der Überwachungskomponente ein Fehler im Ground State erkannt wird, der Fehler von der Überwachungskomponente korrigiert wird. Anschließend sendet die Überwachungskomponente den korrigierten Ground-State an die Verarbeitungskomponente und erzwingt mit diesem korrigierten Ground-State einen Restart der Verarbeitungskomponente.

Durch diese Erfindung ergeben sich folgende signifikante wirtschaftliche Vorteile:
■ Die Robustheit eines Echtzeitsystems wird wesentlich verbessert, da transiente Ausfälle einer Verarbeitungskomponente erkannt und korrigiert werden.
■ Das vorgeschlagene Verfahren funktioniert bei allen transienten Störungen, unabhängig davon ob der Ausfall der Komponente durch einen *Heisenbug* im Hardware oder Softwareentwurf oder durch eine operative Störung verursacht wurde.

Die hier beschriebene konkrete Realisierung der Erfindung stellt nur eine von vielen Realisierungsmöglichkeiten dieser Erfindung dar.

## Patentansprüche

1. Verfahren zur Erhöhung der Robustheit eines verteilten Echtzeit-Computersystems, bestehend aus einer Vielzahl von Komponenten **(110,120,130),** wobei jede Komponente **(110, 120, 130)** über ein Kommunikationssystem **(100)** Nachrichten an die anderen Komponenten senden kann, wobei das Echtzeit-Computersystem periodische Restartzeitpunkte aufweist, und wobei sich das Echtzeit-Computersystem zu den periodischen Restartzeitpunkten in einem Ground-State befindet,
**dadurch gekennzeichnet, dass**
zumindest eine der Komponenten **(110, 120, 130)** eine Verarbeitungskomponente **(110)** ist, und zumindest eine der Komponenten **(110, 120, 130)** eine Ground-State-Checking-Komponente **(120)** ist,
und wobei die zumindest eine Verarbeitungskomponente **(110)** zu den periodischen Restartzeitpunkten **(211, 212, 213)** ihren Ground-State in einer Ground-State Nachricht **(251, 252, 253)** an die zumindest eine Ground-State-Checking-Komponente **(120)** sendet, und
die Ground-State-Checking-Komponente **(120)** die eintreffende Ground-State-Nachricht im Wertebereich und im Zeitbereich überprüft, und wobei im Falle einer Fehlererkennung in der Ground-State-Nachricht die Ground-State-Checking-Komponente **(120)** den Fehler im Ground-State korrigiert und vor dem nächsten *Restartzeitpunkt* den *korrigierten Ground-State* in einer korrigierten Ground-State-Nachricht an jene Verarbeitungskomponente **(110),** von welcher die fehlerbehaftete Ground-State-Nachricht stammte, sendet, und wobei nach Eintreffen der korrigierten Ground-State-Nachricht bei der Verarbeitungskomponente **(110)** diese Verarbeitungskomponente **(110)** beim nächsten *Restartzeitpunkt* einen Restart unter Anwendung des in der korrigierten Ground-State-Nachricht enthaltenen korrigierten Ground-States durchführt.

2. Verfahren nach Anspruch 1, **dadurch gekennzeichnet, dass** zumindest eine der Komponenten **(110, 120, 130)** als Ausgabekomponente **(130)** zum Empfangen von Ausgabenachrichten von zumindest einer Verarbeitungskomponente **(110)** ausgebildet ist, und wobei eine solche Ausgabekomponente **(130)** einer Ausgabenachricht von einer Verarbeitungskomponente **(110)** auf der Basis von a *priori Wissen* über die erlaubten Werte und Gradienten der Ausgabewerte überprüft, ob die Werte in der Ausgabenachricht richtig sind und im Falle eines Fehlers die von der Verarbeitungskomponente **(110)** empfangenen falschen Werte verwirft.

3. Verteiltes Echtzeitcomputersystem zum Durchführen eines Verfahrens nach Anspruch 1 oder 2, bestehend aus einer Vielzahl von Komponenten **(110, 120, 130),** wobei jede Komponente **(110, 120, 130)** über ein zeitgesteuertes Kommunikationssystem **(100)** Nachrichten an die anderen Komponenten senden kann, wobei das Echtzeit-Computersystem periodische Restartzeitpunkte aufweist, und wobei sich das Echtzeit-Computersystem zu den periodischen Restartzeitpunkten in einem Ground-State befindet,
**dadurch gekennzeichnet, dass**
zumindest eine der Komponenten **(110, 120, 130)** eine Verarbeitungskomponente **(110)** ist, und zumindest eine der Komponenten **(110, 120, 130)** eine Ground-State-Checking-Komponente **(120)** ist,
und wobei die zumindest eine Verarbeitungskomponente **(110)** zu den periodischen Restartzeitpunkten **(211, 212, 213)** ihren Ground-State in einer Ground-State Nachricht **(251, 252, 253)** an die zumindest eine Ground-State-Checking-Komponente **(120)** sendet,
die Ground-State-Checking-Komponente **(120)** die eintreffende Ground-State-Nachricht im Wertebereich und im Zeitbereich überprüft, und wobei im Falle einer Fehlererkennung in der Ground-State-Nachricht die Ground-State-Checking-Komponente **(120)** den Fehler im Ground-State korrigiert und vor dem nächsten *Restartzeitpunkt* den *korrigierten Ground-State* in einer korrigierten Ground-State-Nachricht an jene Verarbeitungskomponente **(110),** von welcher die fehlerbehaftete Ground-State-Nachricht stammte, sendet, und wobei nach Eintreffen der korrigierten Ground-State-Nachricht bei der Verarbeitungskomponente **(110)** diese Verarbeitungskomponente **(110)** beim nächsten *Restartzeitpunkt* einen Restart unter Anwendung des in der korrigierten Ground-State-Nachricht enthaltenen korrigierten Ground-States durchführt.

4. Computersystem nach Anspruch 3, **dadurch gekennzeichnet, dass** jede Komponente **(110, 120, 130)** ein autonomer Computer mit der erforderlichen System- und Anwendersoftware ist und die Kommunikation über leitungsgebundene oder drahtlose Kommunikationskanäle abgewickelt wird.

5. Computersystem nach Anspruch 3, **dadurch gekennzeichnet, dass** jede Komponente **(110, 120, 130)** ein IP-Core in einem System-on-Chip ist und die Kommunikation über ein Network-on-Chip abgewickelt wird.

6. Computersystem nach einem der Ansprüche 3 bis 5, **dadurch gekennzeichnet, dass** es in Komponenten strukturiert ist, welche Komponenten unabhängige Fault-Containment Units (FCU) bilden.

## Claims

1. A method for increasing the robustness of a distributed real-time computer system consisting of a number of components (110, 120, 130), wherein each component (110, 120, 130) can transmit messages to the other components via a communication system (100), wherein the real-time computer system has periodic restart times, and wherein the real-time computer system is in a ground state at the periodic restart times,
**characterised in that**
at least one of the components (110, 120, 130) is a processing component (110) and at least one of the components (110, 120, 130) is a ground-state-checking component (120),
and wherein the at least one processing component (110) transmits its ground state in a ground state message (251, 252, 253) to the at least one ground-state-checking component (120) at the periodic restart times (211, 212, 213), and
the ground-state-checking component (120) checks the value range and time range of the incoming ground state message, and wherein, in the event that a fault is detected in the ground state message, the ground-state-checking component (120) corrects the fault in the ground state and, before the next *restart time,* transmits the *corrected ground state* in a corrected ground state message to the processing component (110) from which the faulty ground state message originated, and wherein, upon arrival of the corrected ground state message at the processing component (110), this processing component (110) performs a restart at the next *restart time* with use of the corrected ground state contained in the corrected ground state message.

2. The method according to Claim 1, **characterised in that** at least one of the components (110, 120, 130) is formed as an output component (130) for receiving output messages from at least one processing component (110), and wherein such an output component (130) checks an output message from a processing component (110) on the basis of *a priori knowledge* concerning the allowed values and gradients of the output values, checks whether the values in the output message are correct, and, in the event of a fault, rejects the false values received from the processing component (110).

3. A distributed real-time computer system for carrying out a method according to Claim 1 or 2, consisting of a number of components (110, 120, 130), wherein each component (110, 120, 130) can transmit messages to the other components via a time-controlled communication system (100), wherein the real-time computer system has periodic restart times, and wherein the real-time computer system is in a ground state at the periodic restart times,
**characterised in that**
at least one of the components (110, 120, 130) is a processing component (110) and at least one of the components (110, 120, 130) is a ground-state-checking component (120),
and wherein the at least one processing component (110) transmits its ground state in a ground state message (251, 252, 253) to the at least one ground-state-checking component (120) at the periodic restart times (211, 212, 213),
the ground-state-checking component (120) checks the value range and time range of the incoming ground state message, and wherein, in the event that a fault is detected in the ground state message, the ground-state-checking component (120) corrects the fault in the ground state and, before the next *restart time,* transmits the *corrected ground state* in a corrected ground state message to the processing component (110) from which the faulty ground state message originated, and wherein, upon arrival of the corrected ground state message at the processing component (110), this processing component (110) performs a restart at the next *restart time* with use of the corrected ground state contained in the corrected ground state message.

4. The computer system according to Claim 3, **characterised in that** each component (110, 120, 130) is an autonomous computer with the necessary system and user software and the communication is performed via wired or wireless communication channels.

5. The computer system according to Claim 3, **characterised in that** each component (110, 120, 130) is an IP core in a system-on-chip and the communication is performed via a network-on-chip.

6. The computer system according to one of Claims 3 to 5, **characterised in that** it is structured into components, which components for independent fault containment units (FCUs).

## Revendications

1. Procédé permettant d'augmenter la robustesse d'un système informatique en temps réel réparti, composé d'une pluralité de composants (110, 120, 130), chaque composant (110, 120, 130) pouvant envoyer par le biais d'un système de communication (100) des messages aux autres composants, le système informatique en temps réel comprenant des moments de redémarrage périodiques et le système informatique en temps réel se trouvant dans un état fondamental aux moments de redémarrage périodiques,
**caractérisé en ce**
**qu'**au moins un des composants (110, 120, 130) est un composant de traitement (110) et au moins un des composants (110, 120, 130) est un composant de contrôle d'état fondamental (120),
et ledit au moins un composant de traitement (110) envoyant aux moments de redémarrage périodiques (211, 212, 213) son état fondamental dans un message d'état fondamental (251, 252, 253) à l'au moins un composant de contrôle d'état fondamental (120), et
le composant de contrôle d'état fondamental (120) vérifiant le message d'état fondamental arrivant dans la plage de valeurs et dans la plage temporelle, et, en cas de détection d'erreur dans le message d'état fondamental, le composant de contrôle d'état fondamental (120) corrigeant l'erreur dans l'état fondamental et, avant le prochain moment de redémarrage, envoyant l'état fondamental corrigé dans un message d'état fondamental corrigé au composant de traitement (110) duquel provient le message d'état fondamental entaché d'erreur, et, après l'arrivée du message d'état fondamental corrigé dans le composant de traitement (110), ce composant de traitement (110) exécutant un redémarrage, lors du prochain moment de redémarrage, en utilisant l'état fondamental corrigé contenu dans le message d'état fondamental corrigé.

2. Procédé selon la revendication 1, **caractérisé en ce qu'**au moins un des composants (110, 120, 130) est formé en tant que composant de sortie (130) pour la réception de messages de sortie d'au moins un composant de traitement (110), et un tel composant de sortie (130) d'un message de sortie d'un composant de traitement (110) vérifiant, sur la base d'une connaissance a priori sur les valeurs et gradients autorisés des valeurs de sortie, si les valeurs dans le message de sortie sont correctes et, en cas d'erreur, rejetant les valeurs erronées reçues du composant de traitement (110).

3. Système informatique en temps réel réparti permettant d'effectuer un procédé selon la revendication 1 ou 2, composé d'une pluralité de composants (110, 120, 130), chaque composant (110, 120, 130) pouvant envoyer, par le biais d'un système de communication (100) commandé temporellement, des messages aux autres composants, le système informatique en temps réel comprenant des moments de redémarrage périodiques et le système informatique en temps réel se trouvant aux moments de redémarrage périodiques dans un état fondamental,
**caractérisé en ce**
**qu'**au moins un des composants (110, 120, 130) est un composant de traitement (110) et au moins un des composants (110, 120, 130) est un composant de contrôle d'état fondamental (120),
et ledit au moins un composant de traitement (110) envoyant aux moments de redémarrage périodiques (211, 212, 213) son état fondamental dans un message d'état fondamental (251, 252, 253) à l'au moins un composant de contrôle d'état fondamental (120),
le composant de contrôle d'état fondamental (120) vérifiant le message d'état fondamental arrivant dans la plage de valeurs et dans la plage temporelle et, en cas de détection d'erreur dans le message d'état fondamental, le composant de contrôle d'état fondamental (120) corrigeant l'erreur dans l'état fondamental et, avant le prochain moment de redémarrage, envoyant l'état fondamental corrigé dans un message d'état fondamental corrigé au composant de traitement (110) duquel provient le message d'état fondamental entaché d'erreur et, après l'arrivée du message d'état fondamental corrigé dans le composant de traitement (110), ce composant de traitement (110) exécutant un redémarrage, lors du prochain moment de redémarrage, en utilisant l'état fondamental corrigé contenu dans le message d'état fondamental corrigé.

4. Système informatique selon la revendication 3, **caractérisé en ce que** chaque composant (110, 120, 130) est un ordinateur autonome doté des logiciels système et utilisateur nécessaires et la communication est développée par le biais de canaux de communication filaires ou sans fil.

5. Système informatique selon la revendication 3, **caractérisé en ce que** chaque composant (110, 120, 130) est un coeur IP dans un système sur puce et la communication est développée par le biais d'un réseau sur puce.

6. Système informatique selon la revendication 3 à 5, **caractérisé en ce qu'**il est structuré dans des composants, lesquels composants forment des unités de confinement de pannes (FCU) indépendantes.
